# EUROPÄISCHE PATENTSCHRIFT

(11) **EP 3 382 350 B1**
(45) Veröffentlichungstag und Bekanntmachung des Hinweises auf die Patenterteilung: **14.10.2020**
(21) Anmeldenummer: 17164146.7
(22) Anmeldetag: 31.03.2017
(51) Int. Cl.: G01F 1/10, G01F 1/115

(54) **DURCHFLUSSMESSER**
FLOW METER
DÉBITMÈTRE

(43) Veröffentlichungstag der Anmeldung: 03.10.2018
(73) Patentinhaber: CIPON GmbH, 73765 Neuhausen (DE)
(72) Erfinder: WARZECHA, Günter, D-85307 Paunzhausen (DE); BA CISSE, Mamoudou, D-73765 Neuhausen (DE)
(74) Vertreter: Wunderlich & Heim Patentanwälte Partnerschaftsgesellschaft mbB

(56) Entgegenhaltungen:
- EP-A1- 3 015 829
- EP-A2- 2 469 243
- WO-A1-98/13672
- WO-A1-2012/027765
- CN-Y- 201 229 191
- US-A- 4 012 958
- US-A1- 2014 275 722

## Beschreibung

Die Erfindung betrifft einen Durchflussmesser zum Bestimmen des Durchflusses von Flüssigkeiten mit einer Viskosität von mehr als 30 mm²/s.

Es sind verschiedene Bauarten von Durchflussmessern bekannt, die jeweils auf bestimmte Anwendungsbereiche hin optimiert sind. Beispielsweise eignen sich Turbinendurchflussmesser zum Bestimmen des Durchflusses von Gasen oder niedrigen viskosen Flüssigkeiten mit einer Viskosität von weniger als 150 mm²/s. Der Vorteil an Turbinendurchflussmessern ist, dass diese relativ leicht sind und so auch in mobilen oder semimobilen Anwendungen eingesetzt werden können. Nachteilig an diesen Durchflussmessern ist jedoch, dass sie nur zum Bestimmen des Durchflusses von Flüssigkeiten mit einer eher geringen Viskosität einsetzbar sind und nur ein Verhältnis von minimalem Durchfluss zu maximalem Durchfluss von 1:10 bis 1:12 unterstützen.

Zum Bestimmen des Durchflusses von Flüssigkeiten mit einer höheren Viskosität, beispielsweise ab 30 mm²/s sind Spindeldurchflussmesser bekannt, bei denen mehrere Spindeln parallel zueinander angeordnet sind, so dass sie bei Durchfluss der zu messenden Flüssigkeit ineinander kämmen und somit einzelne Messkammern ausbilden, in denen die Flüssigkeit durch den Durchflussmesser gefördert wird.

Nachteilig an diesen Konstruktionen ist jedoch, dass sie aufgrund der zwei oder mehr Spindeln oft ein deutlich höheres Gewicht als Turbinendurchflussmesser aufweisen und somit nur äußerst beschränkt in mobilen Anwendungen einsetzbar sind. Auch sind sie konstruktiv relativ komplex aufgebaut, wodurch unter anderem die Produktion kompliziert ist

Es besteht jedoch der Wunsch, beispielsweise für das Aufspritzen von flüssigen Kunststoffen, Bitumen oder Klebstoffe mit Hilfe von Spritzpistolen Durchflussmesser einzusetzen, um die Abgabe zu bestimmen. Diese Pistolen sollen idealerweise frei beweglich ohne eine zusätzliche mechanische Unterstützung sein. Allerdings sind die deutlich leichteren Turbinendurchflussmesser für diesen Einsatzbereich nicht geeignet, da sie bei hohen Viskositäten, wie sie flüssige Kunststoffe, Bitumen oder Klebstoffe aufweisen, nicht mehr die notwendige Genauigkeit der Durchflussmessung erreichen. Diese bedeutet, dass keine betriebssichere Funktion mehr gegeben ist, da die vorhandene Mechanik nicht entsprechend funktioniert.

Aus der CN 201 229 191 Y ist ein Turbinendurchflussmesser bekannt, mit dem auch Flüssigkeiten mit einer höheren Viskosität messbar sein sollen. Aus der EP 3 015 829 A1 ist ein Durchflussmessgerät die Schraubenspindeln aufweist, bekannt.

Der Erfindung liegt daher die **Aufgabe** zugrunde, einen Durchflussmesser zu schaffen, welcher bei einem geringen Gewicht auch für die Durchflussmessung von Flüssigkeiten mit einer hohen Viskosität und für ein Verhältnis von minimalem Durchfluss zu maximalem Durchfluss von 1:50 bis 1:100 geeignet ist.

Diese Aufgabe wird erfindungsgemäß durch einen Durchflussmesser zum Bestimmen des Durchflusses von Flüssigkeiten mit einer Viskosität von mehr als 30 mm²/s mit den Merkmalen des Anspruchs 1 gelöst.

Vorteilhafte Ausführungen der Erfindung sind in den Unteransprüchen und der Beschreibung angegeben.

Bei einem erfindungsgemäßen Durchflussmesser ist vorgesehen, dass dieser ein Gehäuse, welches eine längliche zylinderförmige Aussparung aufweist, besitzt. Zusätzlich ist eine Schraubenspindel vorgesehen, welche eine Längsachse aufweist. Diese Schraubenspindel ist zumindest teilweise in der länglichen zylinderförmigen Aussparung angeordnet und um ihre Längsachse frei drehbar. Ferner weist die Schraubenspindel drei Flügel auf, welche drei Schraubengang definieren. Die längliche zylinderförmige Aussparung definiert eine Messkammer, welche mindestens eine Länge aufweist, um eineinhalb Windungen des Schraubengangs zu umschließen. Ferner ist vorgesehen, dass das Verhältnis von Außendurchmesser zu Kerndurchmesser der Schraubenspindel mindestens 1,5 : 1 beträgt.

Ein Grundgedanke der Erfindung kann darin gesehen werden, dass erkannt wurde, dass es für die Durchflussmessung von Flüssigkeiten mit einer Viskosität von mehr als 30 mm²/s nicht notwendigerweise erforderlich ist, einen Spindeldurchflussmesser mit mehreren Spindeln vorzusehen. Bereits eine Ausführung eines Durchflussmessers mit einer geeigneten Schraubenspindel hat sich hierbei als ausreichend, insbesondere für die Durchflussmessung von flüssigen Kunststoffen, Bitumen oder Klebstoffe, herausgestellt. Diesbezüglich wurde entsprechend der Erfindung jedoch auch erkannt, dass dies nicht mit jeder beliebigen Schraubenspindel möglich ist.

Es muss hierbei erreicht werden, dass zum einen ein möglichst geringer Druckverlust zwischen Einfluss und Ausfluss in dem Durchflussmesser vorhanden sind und zum anderen, dass die Schraubenspindel ausreichend durch das durchfließende Medium, insbesondere die Flüssigkeit, in Drehung um ihre Längsachse versetzt wird. Dies wird entsprechend der Erfindung dadurch erreicht, dass das Verhältnis des Außendurchmessers zum Kerndurchmesser mindestens 1,5 : 1 beträgt. Es wurde erkannt, dass bei einer derartigen Ausführung des Verhältnisses die Flügel ausreichend stark ausgebildet beziehungsweise ausgeprägt sind, um eine Drehung der Schraubenspindel um ihre Längsachse bei gängigen Flüssigkeiten mit höheren Viskositäten zu erreichen. Hierbei kann das Verhältnis bevorzugt auch 2 : 1 oder größer, insbesondere 20 : 7, betragen.

Grundsätzlich kann der Spiralwinkel der Schraubenfeder beliebig ausgeführt sein. Bevorzugt ist es jedoch, wenn dieser durchschnittlich 15° beträgt. Unter Spiralwinkel im Sinne der Erfindung ist der Winkel zwischen dem Flügel und der Längsachse zu verstehen. Dies bedeutet, dass bei einem Sparwinkel von 0° kein Flügel vorhanden wäre, wohingegen bei einem Spiralwinkel von 90° der Flügel derart ausgebildet wäre, dass kein Durchfluss möglich ist.

Ein derartiger durchschnittlicher Spiralwinkel hat sich als guter Kompromiss zwischen der durch ihn entstehenden Druckdifferenz beim Ein- und Ausfluss bei viskosen Flüssigkeiten und der Notwendigkeit der Drehung der Schraubenspindel herausgestellt.

Die Schraubenspindel kann mit drei Flügeln Flügeln ausgestaltet sein. Ein gutes Verhältnis zwischen entstehender Druckdifferenz und Drehung um die Längsachse ergibt sich, wenn drei Flügel vorgesehen sind, welche entsprechend drei Schraubengänge definieren. Erfindungsgemäß ist es hierbei, wenn drei Flügel sowie drei Schraubengänge ausgebildet sind. Verständlicherweise wird die Druckdifferenz auch basierend auf dem Durchmesser der Zu- und Ableitungen wie der Viskosität der Flüssigkeit beeinflusst. Eine Ausführung mit drei Flügeln hat sich als relativ universell anwendbar unabhängig von der Viskosität und der Menge des Durchflusses herausgestellt.

Zur Lagerung der Schraubenspindel kann ein Gleitlager mit Kugelaufsatz vorgesehen sein. Grundsätzlich sind auch andere Lager wie Rollenwälzlager oder klassische Kugellager möglich. Ein Gleitlager mit Kugelaufsatz eignet sich insbesondere bei einem vertikalen Einsatz oder Einbau des Durchflussmessers. Dieser kann beispielsweise integriert in Spritzpistolen ausgeführt sein, bei denen die Zuleitung von unten ausgeführt ist. Gerade bei derartigen Anwendungen zeigen sich die Vorteile des erfindungsgemäßen Durchflussmessers, da dieser durch sein geringes Gewicht und seine dennoch hohe Genauigkeit auch in Spritzpistolen eingesetzt werden kann, welche nur durch den Benutzer gehalten werden. Hierbei spielt der Gewichtsvorteil eine entscheidende Rolle.

Vorteilhaft ist es, wenn die Schraubenspindel komplett in der Messkammer, welche durch die längliche zylinderförmige Aussparung ausgebildet ist, aufgenommen ist. Wie zuvor bereits beschrieben, i nicht erfindungsgemäß, ist es zwar grundsätzlich ausreichend, wenn lediglich eine halbe Windung eines Schraubenganges der Schraubenspindel in der Messkammer aufgenommen ist, für eine Erhöhung der Messgenauigkeit i, erfindungsgemäß, st es jedoch vorteilhaft, wenn Windungen aufgenommen sind.

Im Eintrittsbereich der viskosen Flüssigkeit in die Messkammer kann ein Einflussvergleichmäßiger vorgesehen sein. Dieser bietet den Vorteil, dass er das Anströmverhalten der Flüssigkeit auf die Schraubenspindel insbesondere den Flügel beeinflusst. Hierdurch kann eine gute, turbulenzarme und gleichmäßige Anströmung erreicht werden, wodurch wiederum die Druckverluste minimiert werden können.

Bevorzugt ist es, wenn ein Lager für die Schraubenspindel im Einflussvergleichmäßiger aufnehmbar oder integriert ausgeführt ist. Bei einer derartigen Ausführung kann auf ein zusätzliches weiteres Bauteil für die Lagerung verzichtet werden. Zusätzlich kann mit dieser Ausführung des Einflussvergleichmäßigers auch der Raum berücksichtigt werden, der für das Lager der Schraubenspindel notwendig ist, und so die Anströmung der Schraubenspindel diesbezüglich optimiert werden. Dies bedeutet, dass bei der Dimensionierung und Konstruktion des Einflussvergleichmäßigers sofort der entsprechende zur Verfügung stehende Durchmesser für den Durchfluss berücksichtigt werden kann.

In einer vorteilhaften Ausführungsform ist eine Einrichtung zum Bestimmen der Umdrehungen pro Zeiteinheit der Schraubenspindel um ihre Längsachse vorgesehen. Mittels dieser Einrichtung werden die Umdrehungen pro Zeiteinheit der Schraubenspindel ermittelt und anhand dieser Größe kann auf den Durchfluss pro Zeiteinheit zurückgeschlossen werden.

Grundsätzlich kann diese Einrichtung in beliebiger Weise ausgeführt sein. Beispielsweise ist es möglich, direkt die Umdrehungen basierend auf einem Sensor zu bestimmen, welcher die vorbeigleitenden Flügel detektiert. Vorteilhaft ist es, wenn ein Pol- oder Magnetrad zum Abgriff der Umdrehungen der Schraubenspindel auf einer Verlängerung der Längsachse der Schraubenspindel angeordnet ist. Dieser Abgriff kann dann beispielsweise induktiv aber auch kapazitativ oder in anderer geeigneter Weise erfolgen.

Der Zu- und/oder der Abfluss der Flüssigkeit in und aus dem Durchflussmesser ist in vorteilhafter Weise in Verlängerung der Längsachse der Schraubenspindel angeordnet. Mit einer derartigen Konstruktion wird erreicht, dass der durch den Durchflussmesser entstehende Druckabfall in der Leitung möglichst gering ist. Zusätzlich entstehen beim Einfluss oder Eintritt nur geringe Turbulenzen, so dass die Genauigkeit des Durchflussmessers erhöht wird.

Die Erfindung wird nachfolgend anhand eines schematischen Ausführungsbeispiels unter Bezugnahme auf eine Figur näher erläutert. Hierbei zeigt:

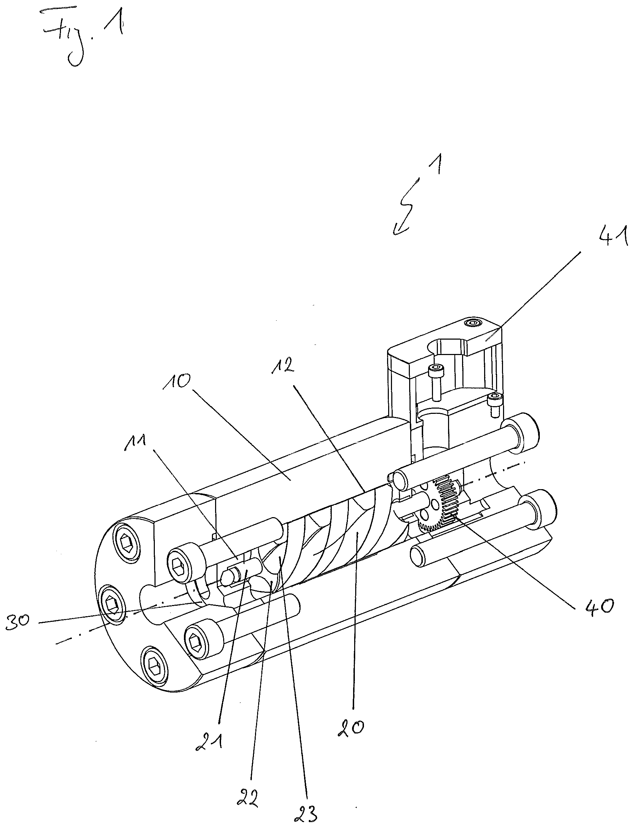

- Fig. 1: eine perspektivische halbgeschnittene Ansicht eines erfindungsgemäßen Durchflussmessers.

In Fig. 1 ist eine teilweise geschnittene Ansicht eines erfindungsgemäßen Durchflussmessers 1 dargestellt. Dieser weist als seine wesentlichen Komponenten ein Gehäuse 10 sowie eine sich daran befindliche Schraubenspindel 20 auf.

Hierbei ist im Gegensatz zu gängigen Schraubendurchflussmessern lediglich eine, insbesondere genau eine, Schraubenspindel 20 vorgesehen. Die Schraubenspindel 20 befindet sich in einer Aussparung 11 des Gehäuses 10, welche eine Messkammer 12 definiert. In dieser ist die Schraubenspindel 20 aufgenommen.

In der hier dargestellten Ausführungsform weist die Schraubenspindel 20 drei Flügel 22 auf, wobei durch die teilgeschnittene Ansicht, insbesondere im Bereich des Bezugszeichens der Flügel 22, lediglich ein Schnitt durch einen Flügel 22 komplett sichtbar ist. Die Flügel 22 definieren dementsprechend drei Schraubengänge 23. Im Zentrum der Schraubenspindel 20 befindet sich die Längsachse 21.

Die Schraubenspindel 20 weist ein Verhältnis von Außendurchmesser zu Kerndurchmesser von etwa 15 : 7 auf. Hierbei wird der Kerndurchmesser im Wesentlichen durch die Längsachse 21 definiert und stellt den Bereich der Schraubenspindel 20 dar, welcher vollständig vom Material ausgefüllt ist. Der Außendurchmesser der Schraubenspindel 20 wird dementsprechend durch die maximale radiale Ausdehnung der Flügel 22 bestimmt.

Am hinteren Ende, das heißt stromabwärts gesehen der Schraubenspindel 20 befindet sich auf einer Verlängerung der Längsachse 21 ein Polrad 40. Oberhalb des Polrades 40 ist ein Anbaugehäuse 41 vorgesehen, in dem eine Einrichtung aufgenommen werden kann, die anhand der an ihr vorbeigeführten Zähne des Polrades 40 die Umdrehungen pro Zeiteinheit der Schraubenspindel 20 ermitteln kann.

Auf der einflussseitigen Seite des Durchflussmessers 1, das heißt stromaufwärts der Schraubenspindel 20, ist ein Einflussvergleichmäßiger 30 vorgesehen. Dieser hat zwei Zwecke. Zum einen dient er dazu, die in den Durchflussmesser 1 einströmende Flüssigkeit möglichst gut auf die Flügel 22 der Schraubenspindel 20 zu leiten, so dass mit einem möglichst geringen Druckunterschied die Schraubenspindel 20 in Drehung um ihre Längsachse 21 versetzt wird. Zum anderen ist im Rahmen des Einflussvergleichmäßigers 30 auch die vordere Lagerung der Schraubenspindel 20, insbesondere deren Längsachse 21 vorgesehen.

Demnach wird mit dem erfindungsgemäßen Durchflussmesser ein Durchflussmesser angegeben, der bei einem geringen Gewicht die Durchflussmessung der Flüssigkeiten mit hoher Viskosität und ein großes Verhältnis von minimalem Durchfluss zu maximalem Durchfluss ermöglicht.

## Patentansprüche

1. Durchflussmesser (1) zum Bestimmen des Durchflusses von Flüssigkeiten mit einer Viskosität von mehr als 30 mm²/s,
mit einem Gehäuse (10), welches genau eine längliche zylinderförmige Aussparung (11) aufweist,
mit genau einer Schraubenspindel (20), welche eine Längsachse (21) aufweist, wobei die Schraubenspindel (20) zumindest teilweise in der länglichen zylinderförmigen Aussparung (11) angeordnet ist und um ihre Längsachse (21) frei drehbar ist,
wobei die Schraubenspindel (20) drei Flügel (22) aufweist, welcher entsprechend drei Schraubengänge (23) definieren,
wobei die längliche zylindrische Aussparung (11) eine Messkammer (12) definiert, welche mindestens eine Länge aufweist, um eineinhalb Windungen der Schraubengänge (23) zu umschließen, und
wobei das Verhältnis des Außendurchmessers zum Kerndurchmesser der Schraubenspindel (20) mindestens 1,5 : 1 beträgt.

2. Durchflussmesser nach Anspruch 1,
**dadurch gekennzeichnet,**
**dass** der Spiralwinkel der Schraubenspindel (20) mindestens durchschnittlich 15° beträgt.

3. Durchflussmesser nach einem der Ansprüche 1 oder 2,
**dadurch gekennzeichnet,**
**dass** ein Gleitlager zum Lagern der Schraubenspindel (20) vorgesehen ist.

4. Durchflussmesser nach einem der Ansprüche 1 bis 3,
**dadurch gekennzeichnet,**
**dass** die Schraubenspindel (20) komplett in der Messkammer (12) aufgenommen ist.

5. Durchflussmesser nach einem der Ansprüche 1 bis 4,
**dadurch gekennzeichnet,**
**dass** im Eintrittsbereich der Flüssigkeit in die Messkammer (12) ein Einflussvergleichmäßiger (30) vorgesehen ist.

6. Durchflussmesser nach Anspruch 5,
**dadurch gekennzeichnet,**
**dass** ein Lager für die Schraubenspindel (20) im Einflussvergleichmäßiger (30) aufnehmbar oder integriert ausgeführt ist.

7. Durchflussmesser nach einem der Ansprüche 1 bis 6,
**dadurch gekennzeichnet,**
**dass** eine Einrichtung zum Bestimmen der Umdrehungen pro Zeiteinheit der Schraubenspindel (20) vorgesehen ist.

8. Durchflussmesser nach einem der Ansprüche 1 bis 7,
**dadurch gekennzeichnet,**
**dass** ein Pol- oder Magnetrad (40) zum Abgriff der Umdrehungen der Schraubenspindel (20) auf einer Verlängerung der Längsachse (21) der Schraubenspindel (20) angeordnet ist.

9. Durchflussmesser nach einem der Ansprüche 1 bis 8,
**dadurch gekennzeichnet,**
**dass** der Zu- und/oder der Abfluss in Verlängerung der Längsachse (21) der Schraubenspindel (20) angeordnet ist.

## Claims

1. Flow meter (1) for determining the flow rate of liquids with a viscosity of more than 30 mm²/s,
with a housing (10), which comprises precisely one elongated cylindrical recess (11),
with precisely one screw spindle (20), which comprises a longitudinal axis (21),
wherein the screw spindle (20) is arranged at least partially in the elongated cylindrical recess (11) and is freely rotatable about its longitudinal axis (21),
wherein the screw spindle (20) comprises three wings (22) which correspondingly define three screw threads (23),
wherein the elongated cylindrical recess (11) defines a measuring chamber (12), which has at least a length to enclose one and a half turns of the screw threads (23), and
wherein the ratio of the outer diameter to the core diameter of the screw spindle (20) is at least 1.5:1.

2. Flow meter according to claim 1,
**characterised in that**
the helix angle of the screw spindle (20) is at least 15° on average.

3. Flow meter according to one of claims 1 or 2,
**characterised in that**
a slide bearing is provided for supporting the screw spindle (20).

4. Flow meter according to one of claims 1 to 3,
**characterised in that**
the screw spindle (20) is received completely in the measuring chamber (12).

5. Flow meter according to one of claims 1 to 4,
**characterised in that**
an inflow homogeniser (30) is provided in the entrance area of the liquid into the measuring chamber (12).

6. Flow meter according to claim 5,
**characterised in that**
a bearing for the screw spindle (20) is configured to be receivable or integrated in the inflow homogeniser (30).

7. Flow meter according to one of claims 1 to 6,
**characterised in that**
a device for determining the revolutions per unit of time of the screw spindle (20) is provided.

8. Flow meter according to one of claims 1 to 7,
**characterised in that**
a pole wheel or magnet wheel (40) for tapping the revolutions of the screw spindle (20) is arranged on an extension of the longitudinal axis (21) of the screw spindle (20).

9. Flow meter according to one of claims 1 to 8,
**characterised in that**
the inflow and/or the outflow is arranged in an extension of the longitudinal axis (21) of the screw spindle (20).

## Revendications

1. Débitmètre (1) pour déterminer le débit de liquides d'une viscosité supérieure à 30 mm²/s,
avec un boîtier (10) qui possède exactement une cavité cylindrique longitudinale (11),
avec exactement une broche filetée (20) qui possède un axe longitudinal (21),
dans lequel la broche filetée (20) est au moins partiellement disposée dans la cavité cylindrique longitudinale (11) et peut pivoter librement autour de son axe longitudinal (21),
dans lequel la broche filetée (20) possède trois pales (22) qui définissent de façon correspondante trois pas de vis (23),
dans lequel la cavité cylindrique longitudinale (11) définit une chambre de mesure (12) qui possède au moins une longueur permettant d'envelopper une spire et demi des pas de vis (23) et
dont le rapport entre le diamètre extérieur et la chambre de mesure de la broche filetée (20) est d'au moins 1,5: 1.

2. Débitmètre selon la revendication 1,
**caractérisé**
**en ce que** l'angle d'hélice de la broche filetée (20) est d'au moins 15° en moyenne.

3. Débitmètre selon une des revendications 1 ou 2,
**caractérisé**
**en ce qu'**il est prévu un palier lisse pour supporter la broche filetée (20).

4. Débitmètre selon une des revendications 1 à 3,
**caractérisé**
**en ce que** la broche filetée (20) est entièrement logée dans la chambre de mesure (12).

5. Débitmètre selon une des revendications 1 à 4,
**caractérisé**
**en ce qu'**il est prévu un égaliseur de flux d'entrée (30) dans la zone d'entrée du liquide dans la chambre de mesure (12).

6. Débitmètre selon la revendication 5,
**caractérisé**
**en ce qu'**un palier pour la broche filetée (20) peut être reçu ou est intégré dans l'égaliseur de flux d'entrée (30).

7. Débitmètre selon une des revendications 1 à 6,
**caractérisé**
**en ce qu'**il est prévu un dispositif pour déterminer le nombre de tours par unité de temps de la broche filetée (20).

8. Débitmètre selon une des revendications 1 à 7,
**caractérisé**
**en ce qu'**une roue polaire ou magnétique (40) est placée dans le prolongement de l'axe longitudinal (21) de la broche filetée (20) pour détecter les tours de la broche filetée (20).

9. Débitmètre selon une des revendications 1 à 8,
**caractérisé**
**en ce que** le flux d'entrée et/ou le flux de sortie sont disposés dans le prolongement de l'axe longitudinal (21) de la broche filetée (20).
